# EUROPEAN PATENT SPECIFICATION

(11) **EP 4 622 139 B1**
(45) Date of publication and mention of the grant of the patent: **04.11.2026**
(21) Application number: 22966722.5
(22) Date of filing: 28.11.2022
(51) Int. Cl.: H04B 10/548, H04J 14/02, G02F 1/01

(54) **OPTICAL MODULATOR, TRANSMISSION APPARATUS, COMMUNICATION SYSTEM, AND MODULATION METHOD**
OPTISCHER MODULATOR, ÜBERTRAGUNGSVORRICHTUNG, KOMMUNIKATIONSSYSTEM UND MODULATIONSVERFAHREN
MODULATEUR OPTIQUE, APPAREIL DE TRANSMISSION, SYSTÈME DE COMMUNICATION ET PROCÉDÉ DE MODULATION

(43) Date of publication of application: 24.09.2025
(73) Proprietor: Huawei Technologies Co., Ltd., Shenzhen, Guangdong 518129 (CN)
(72) Inventor: QIN, Yang, Shenzhen, Guangdong 518129 (CN); PENG, Xing, Shenzhen, Guangdong 518129 (CN); ZHENG, Zeqiu, Shenzhen, Guangdong 518129 (CN); YANG, Zhe, Shenzhen, Guangdong 518129 (CN); JIN, Yucheng, Shenzhen, Guangdong 518129 (CN)
(74) Representative: Gill Jennings & Every LLP
(86) International application number: PCT/CN2022/134808
(87) International publication number: WO 2024/113118

(56) References cited:
- CN-A- 109 946 790
- CN-A- 109 981 182
- CN-A- 109 981 182
- CN-A- 111 474 801
- CN-A- 111 474 801
- CN-A- 113 568 094
- CN-A- 113 568 094
- US-A- 5 886 807
- US-A1- 2021 328 681
- US-A1- 2021 328 681

## Description

### TECHNICAL FIELD

This application relates to the field of communication technologies, and in particular, to an optical modulator, a transmitting apparatus, a communication system, and a modulation method.

### BACKGROUND

With rapid development of communication technologies, modern communication has increasingly higher requirements for large-capacity and high-speed information. As a high-speed, high-bandwidth, and multidimensional transmission medium, light makes an optical communication technology develop rapidly. An optical modulator is an important active device in the optical communication field, and is widely used in optical transceiver module products. A working mode of the optical modulator is to convert a voltage modulation signal with a high or low change into a light intensity modulation signal with a high or low change. For example, the optical modulator is a Mach-Zehnder modulator (Mach-Zehnder modulator, MZM).

However, because the optical modulator generally has a large size, for example, a silicon-based MZM is generally 1 to 3 millimeters (mm) long, and a lithium niobate MZM is approximately 1 centimeter (cm) long, the optical modulator is not highly integrated. This is nonconducive to development of miniaturization.

CN 109981182 A describes a four-phase reflection type coherent optical communication system.

CN 113568094 A describes an optical signal processing chip based on arrayed waveguide grating.

US 2021/328681 A1 describes an apparatus for generating optical signal of multi-channel.

CN 111474801 A describes a photoelectric modulation chip, optical assembly, optical module and optical network device.

US 5886807 A describes a traveling-wave reflective electro-optic modulator.

### SUMMARY

This application provides an optical modulator, a transmitting apparatus, a communication system, and a modulation method, to reduce a size of the optical modulator and improve integration.

According to a first aspect, this application provides an optical modulator. The optical modulator includes a beam combiner/splitter, a first electro-optic phase shifter and a second electro-optic phase shifter that are connected to the beam combiner/splitter, a first reverser connected to the first electro-optic phase shifter, and a second reverser connected to the second electro-optic phase shifter.

When the optical modulator works, the beam combiner/splitter is configured to: split an input optical signal into a first optical signal and a second optical signal, input the first optical signal into the first electro-optic phase shifter, and input the second optical signal into the second electro-optic phase shifter.

The first electro-optic phase shifter is configured to: perform first phase modulation on the first optical signal to obtain a first modulated optical signal, and input the first modulated optical signal into the first reverser. The first reverser is configured to adjust a transmission direction of the first modulated optical signal from a first transmission direction to a second transmission direction, to input the first modulated optical signal into the first electro-optic phase shifter, where the second transmission direction is opposite to the first transmission direction. The first electro-optic phase shifter is further configured to: perform the first phase modulation on the first modulated optical signal to obtain a second modulated optical signal, and input the second modulated optical signal into the beam combiner/splitter.

The second electro-optic phase shifter is configured to: perform second phase modulation on the second optical signal to obtain a third modulated optical signal, and input the third modulated optical signal into the second reverser. The second reverser is configured to adjust a transmission direction of the third modulated optical signal from a third transmission direction to a fourth transmission direction, to input the third modulated optical signal into the second electro-optic phase shifter, where the fourth transmission direction is opposite to the third transmission direction. The second electro-optic phase shifter is further configured to: perform the second phase modulation on the third modulated optical signal to obtain a fourth modulated optical signal, and input the fourth modulated optical signal into the beam combiner/splitter.

The beam combiner/splitter is further configured to: combine the second modulated optical signal and the fourth modulated optical signal to form a modulated optical signal, and output the modulated optical signal.

In this way, because the first reverser is disposed in the optical modulator, the first optical signal may be reversely transmitted after undergoing phase modulation once, so that the first optical signal undergoes phase modulation twice back and forth in a phase modulation area of the first electro-optic phase shifter (that is, a phase shift amount of the first optical signal is doubled). Similarly, because the second reverser is disposed in the optical modulator, the second optical signal may be reversely transmitted after undergoing phase modulation once, so that the second optical signal undergoes phase modulation twice back and forth in a phase modulation area of the second electro-optic phase shifter (that is, a phase shift amount of the second optical signal is doubled). However, in a conventional optical modulator, an optical signal only undergoes phase modulation once in a phase modulation area of a modulation arm. Therefore, compared with the conventional optical modulator, lengths of the phase modulation areas of the first electro-optic phase shifter and the second electro-optic phase shifter in the optical modulator may be halved, to effectively reduce a size of the optical modulator and improve integration.

In a possible design, the first reverser is a first reflector, a first waveguide loopback device, or a first grating structure, and the second reverser is a second reflector, a second waveguide loopback device, or a second grating structure.

A splitting ratio of the first optical signal to the second optical signal is 1:m, where m>0 and m≠1. In other words, the beam combiner/splitter may split the input optical signal in an unequal ratio. In this way, after phase modulation is performed on the first optical signal and the second optical signal separately subsequently, because the first optical signal and the second optical signal are obtained through splitting of the unequal ratio, after the first optical signal and the second optical signal are combined, a phase deviation of the first optical signal and a phase deviation of the second optical signal are not completely offset. Therefore, compared with the input optical signal, an optical signal that is finally output is superimposed with additional phase modulation, so that pre-compensation can be implemented.

In a possible design, the beam combiner/splitter is a multi-mode interferometer.

In a possible design, the optical modulator further includes a microring resonator array connected to the beam combiner/splitter, and the microring resonator array is configured to perform delay compensation on the modulated optical signal output by the beam combiner/splitter.

In this way, delay compensation is performed on the modulated optical signal by disposing the microring resonator array, to balance dispersion caused by a transmission link.

According to a second aspect, an embodiment of this application provides a transmitting apparatus. The transmitting apparatus includes the optical modulator according to any possible design of the first aspect.

According to a third aspect, an embodiment of this application provides a transmitting apparatus. The transmitting apparatus includes a beam splitter and N optical modulators connected to the beam splitter. The beam splitter is configured to: split an input optical signal into N optical signals, and respectively input the N optical signals into the N optical modulators. An i^{th} optical modulator in the N optical modulators is configured to: perform phase modulation on an i^{th} optical signal in the N optical signals, and output an i^{th} modulated optical signal, where i=1, 2, ..., N, and N is an integer greater than 1.

In a possible design, the N optical signals have a same splitting ratio.

The N optical modulators include the optical modulator according to any possible design of the first aspect.

According to a fourth aspect, an embodiment of this application provides a communication system. The communication system includes a receiving apparatus, a fiber link, and the transmitting apparatus according to the second aspect or the third aspect. The fiber link connects the transmitting apparatus and the receiving apparatus.

According to a fifth aspect, an embodiment of this application provides a modulation method. The method may be applied to the optical modulator in the first aspect. The method includes: splitting an input optical signal into a first optical signal and a second optical signal; performing, in a first phase modulation area, first phase modulation on the first optical signal to obtain a first modulated optical signal; adjusting a transmission direction of the first modulated optical signal from a first transmission direction to a second transmission direction, to transmit the first modulated optical signal to the first phase modulation area, where the second transmission direction is opposite to the first transmission direction; and performing, in the first phase modulation area, the first phase modulation on the first modulated optical signal to obtain a second modulated optical signal; performing, in a second phase modulation area, second phase modulation on the second optical signal to obtain a third modulated optical signal; adjusting a transmission direction of the third modulated optical signal from a third transmission direction to a fourth transmission direction, to transmit the third modulated optical signal to the second phase modulation area, where the fourth transmission direction is opposite to the third transmission direction; and performing, in the second phase modulation area, the second phase modulation on the third modulated optical signal to obtain a fourth modulated optical signal; and combining the second modulated optical signal and the fourth modulated optical signal to form a modulated optical signal, and outputting the modulated optical signal. A splitting ratio of the first optical signal to the second optical signal is 1:m, where m>0 and m≠1.

### BRIEF DESCRIPTION OF DRAWINGS

FIG. 1 is a diagram of wavelength division multiplexing according to an embodiment of this application;
FIG. 2 is a diagram of a conventional optical modulator (for example, an MZM) according to an embodiment of this application;
FIG. 3 is a diagram of a structure of an optical modulator according to Embodiment 1 of this application;
FIG. 4 is a diagram of a structure of an optical modulator according to Embodiment 2 of this application;
FIG. 5 is a diagram of a structure of a transmitting apparatus according to Embodiment 3 of this application;
FIG. 6 is a diagram of another structure of a transmitting apparatus according to Embodiment 3 of this application;
FIG. 7 is a diagram of a communication system according to an embodiment of this application; and
FIG. 8 is a schematic flowchart corresponding to a modulation method according to an embodiment of this application.

### DESCRIPTION OF EMBODIMENTS

The following describes the technical solutions in embodiments of this application with reference to the accompanying drawings in embodiments of this application.

With rapid development of communication technologies, a quantity of mobile users and a service volume increase rapidly, and a quantity of radio access network devices (for example, base stations) increases sharply. To optimize a network architecture, in a wireless fronthaul scenario, a centralized radio access network (centralized radio access network, C-RAN) becomes a mainstream application. A C-RAN network architecture can implement centralized management of a building baseband unit (building baseband unit, BBU). The BBU and a radio frequency unit are connected through a fiber, and the radio frequency unit is, for example, a remote radio unit (remote radio unit, RRU).

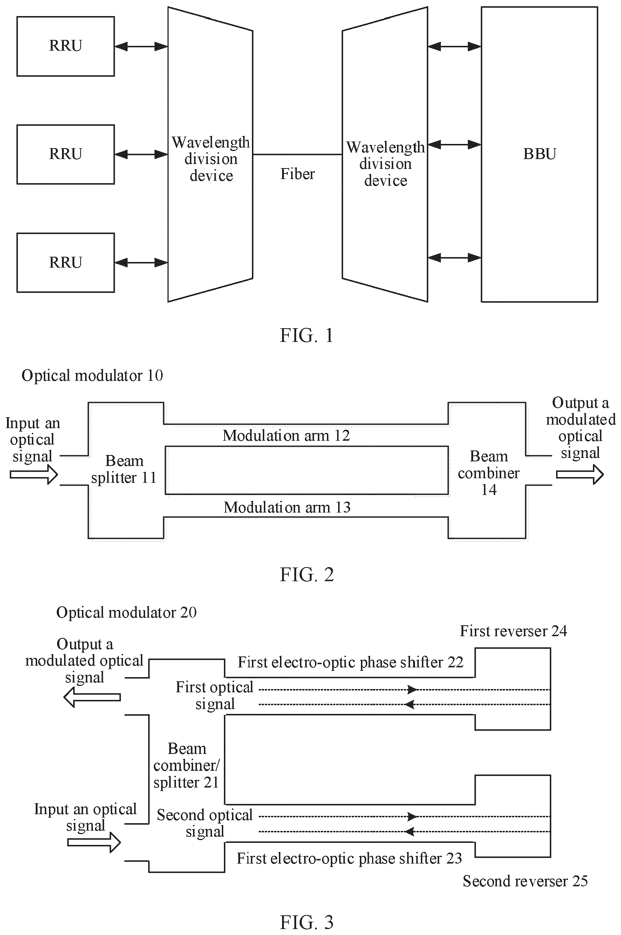

Because the BBU and the RRU are generally far away from each other, to save fiber resources, a wavelength division multiplexing (wavelength division multiplexing, WDM) technology may be used to implement fiber multiplexing. As shown in FIG. 1, a plurality of radio frequency units may be connected to a BBU by multiplexing one fiber through a wavelength division device, to improve fiber utilization. In addition, main fibers connected to the radio frequency units that perform fiber multiplexing through the same wavelength division device (fibers between a wavelength division device on a radio frequency unit side and a wavelength division device on the BBU side) are the same, and only lengths of pigtails between the wavelength division device on the radio frequency unit side and the radio frequency units may be different.

The WDM technology may also be referred to as an optical wavelength multiplexing technology, and is a data transmission technology of combining optical signals with two or more different wavelengths using a multiplexer (multiplexer) at a transmitting end and coupling combined signals to a same fiber for sending, and separating optical signals with various wavelengths using a de-multiplexer (de-multiplexer) at a receive end. A basic principle is that different optical signals are carried in different colors (wavelength frequencies) and then multiplexed onto one fiber for transmission. Common wavelength division multiplexing includes coarse wavelength division multiplexing (coarse wavelength division multiplexing, CWDM), dense wavelength division multiplexing (dense wavelength division multiplexing, DWDM), LAN-wavelength division multiplexing (lan-wavelength division multiplexing, LWDM), and the like.

The wavelength division device is a device of using the WDM technology to support transmission of optical signals with two or more different wavelengths in one fiber. For example, the wavelength division device may be a CWDM wavelength division device, a DWDM wavelength division device, or an LWDM wavelength division device. The wavelength division device may standardize wavelengths of optical modules of the radio frequency unit and the BBU, and different wavelength division devices have different specifications for the wavelengths of the optical modules of the radio frequency unit and a BBU port. For example, the wavelength division device is a 6-wavelength CWDM wavelength division device. According to a specification of the 6-wavelength CWDM wavelength division device for a wavelength of an optical module, the wavelength of the optical module of the radio frequency unit may be 1271, 1291, or 1311 (unit: nanometer (nm)), and the wavelength of the optical module of the BBU may be 1331, 1351, or 1371 (unit: nanometer).

For example, the BBU sends a signal. The optical module of the BBU may include three optical modulators. The three optical modulators modulate optical signals with three wavelengths (1331 nm, 1351 nm, or 1371 nm), and input modulated optical signals to the wavelength division device, for the wavelength division device to transmit the optical signals with the three wavelengths to different radio frequency units through one fiber.

FIG. 2 is a diagram of a conventional optical modulator (for example, an MZM). As shown in FIG. 2, the conventional optical modulator 10 may include a beam splitter 11, and a modulation arm disposed on each branch of the beam splitter 11. Refer to FIG. 2. During specific disposition, the beam splitter 11 has two symmetrically disposed branches, that is, two symmetrically disposed modulation arms (a modulation arm 12 and a modulation arm 13). Further, the conventional optical modulator 10 further includes a beam combiner 14 connected to the two modulation arms.

During specific implementation, after receiving an input optical signal, the beam splitter 11 splits the optical signal into two light beams, namely, two optical signals, with equal power (that is, a splitting ratio of the two optical signals is 1:1). For example, the two optical signals are an optical signal a and an optical signal b. The optical signal a is input to the modulation arm 12, and the optical signal b is input to the modulation arm 13. Further, the modulation arm 12 performs phase modulation on the optical signal a to obtain a modulated optical signal a, and inputs the modulated optical signal a into the beam combiner 14. The modulation arm 13 performs phase modulation on the optical signal b to obtain a modulated optical signal b, and inputs the modulated optical signal b into the beam combiner 14. The beam combiner 14 combines the modulated optical signal a and the adjusted optical signal b, and outputs an optical signal obtained through beam combination.

A conventional optical modulator uses an optical interference principle to convert phase modulation into intensity modulation. Specifically, when phases of two light beams output by the two modulation arms are the same, according to an interference theory of light, constructive interference occurs during beam combination, and output light intensity is the largest, which may be considered as a high-level signal. When a phase difference exists between two light beams output by the two modulation arms, light intensity is not the largest after beam combination is interfered with. If the phase difference is π, interference is canceled, and output light intensity is the smallest, which may be considered as a low-level signal. In this way, constructive or destructive interference of light intensity is formed based on a phase difference between two light beams. This causes a change in intensity, to modulate an optical signal.

However, the conventional optical modulator is generally large in size. A lithium niobate MZM is used as an example. The lithium niobate MZM performs local doping on a monocrystalline lithium niobate material by using a titanium diffusion or proton exchange process, to form a waveguide. A refractive index difference between a core layer and a cladding layer of the waveguide is very small, and the waveguide has a poor binding capability on a light field. In addition, to achieve performance of a low drive voltage, a length of a phase modulation area needs to be designed to be very long. Therefore, a size of a packaged optical modulator is large, which leads to insufficient integration and is not conducive to miniaturization development.

In view of this, in embodiments of this application, a structure of the conventional optical modulator is improved. A reverser is introduced into the optical modulator, so that an optical signal undergoes phase modulation twice back and forth in a phase modulation area. This helps reduce a length of the phase modulation area, to reduce a size of the optical modulator and improve integration.

For example, an optical modulator provided in embodiments of this application may be manufactured on a chip, or may be directly assembled in an optical module. The optical modulator provided in embodiments of this application may be used in a communication device in a communication scenario like wireless fronthaul, midhaul backhaul, a data center, an access network, or a backbone network. For example, the optical modulator provided in embodiments of this application may be used in the foregoing BBU (for example, assembled in the optical module of the BBU).

### Embodiment 1

FIG. 3 is a diagram of a structure of an optical modulator according to Embodiment 1 of this application. As shown in FIG. 3, an optical modulator 20 may include: a beam combiner/splitter 21, a first electro-optic phase shifter 22 and a second electro-optic phase shifter 23 that are connected to the beam combiner/splitter 21 (that is, the first electro-optic phase shifter 22 and the second electro-optic phase shifter 23 are located on two branches of the beam combiner/splitter 21), a first reverser 24 connected to the first electro-optic phase shifter 22, and a second reverser 25 connected to the second electro-optic phase shifter 23.

The beam combiner/splitter 21 is configured to: split an input optical signal into a first optical signal and a second optical signal, input the first optical signal into the first electro-optic phase shifter 22, and input the second optical signal into the second electro-optic phase shifter 23. For example, an input end of the beam combiner/splitter 21 may be connected to a laser, and the laser is configured to input the optical signal to the beam combiner/splitter 21. In a possible implementation, the laser may be a continuous wave (continuous wave, CW) laser.

The first electro-optic phase shifter 22 is configured to: perform first phase modulation on the first optical signal to obtain a first modulated optical signal, and input the first modulated optical signal into the first reverser 24.

The first reverser 24 is configured to adjust a transmission direction of the first modulated optical signal from a first transmission direction to a second transmission direction, to input the first modulated optical signal into the first electro-optic phase shifter 22, where the second transmission direction is opposite to the first transmission direction.

The first electro-optic phase shifter 22 is further configured to: perform the first phase modulation on the first modulated optical signal to obtain a second modulated optical signal, and input the second modulated optical signal into the beam combiner/splitter 21.

The second electro-optic phase shifter 23 is configured to: perform second phase modulation on the second optical signal to obtain a third modulated optical signal, and input the third modulated optical signal into the second reverser 25.

The second reverser 25 is configured to adjust a transmission direction of the third modulated optical signal from a third transmission direction to a fourth transmission direction, to input the third modulated optical signal into the second electro-optic phase shifter 23, where the fourth transmission direction is opposite to the third transmission direction.

The second electro-optic phase shifter 23 is further configured to: perform the second phase modulation on the third modulated optical signal to obtain a fourth modulated optical signal, and input the fourth modulated optical signal into the beam combiner/splitter 21.

The beam combiner/splitter 21 is further configured to: combine the second modulated optical signal and the fourth modulated optical signal to form a modulated optical signal, and output the modulated optical signal.

In this way, in one aspect, because the first reverser 24 is disposed in the optical modulator 20, the first optical signal may be reversely transmitted after undergoing phase modulation once, so that the first optical signal undergoes phase modulation twice back and forth in the phase modulation area of the first electro-optic phase shifter 22 (that is, a phase shift amount of the first optical signal is doubled). Similarly, because the second reverser 25 is disposed in the optical modulator 20, the second optical signal may be reversely transmitted after undergoing phase modulation once, so that the second optical signal undergoes phase modulation twice back and forth in the phase modulation area of the second electro-optic phase shifter 23 (that is, a phase shift amount of the second optical signal is doubled). However, in the conventional optical modulator 10, an optical signal only undergoes phase modulation once in a phase modulation area of the modulation arm. Therefore, compared with the conventional optical modulator 10, lengths of the phase modulation areas of the first electro-optic phase shifter 22 and the second electro-optic phase shifter 23 in the optical modulator 20 may be halved, to effectively reduce a size of the optical modulator and improve integration.

In addition, when the lengths of the phase modulation areas of the first electro-optic phase shifter 22 and the second electro-optic phase shifter 23 are halved, an electrical signal loss can be effectively reduced (a longer length of the phase modulation area indicates a larger electrical signal loss), so that an amplitude requirement on a drive electrical signal in the first electro-optic phase shifter 22 and the second electro-optic phase shifter 23 is reduced.

In another aspect, optical ports (namely, an input port of an optical signal and an output port of a modulated optical signal) in the optical modulator 20 are located on the beam combiner/splitter 21, that is, the input port of the optical signal and the output port of the modulated optical signal are on a same side. In the conventional optical modulator 10, an input port of an optical signal is located on the beam splitter 11, and an output port of a modulated optical signal is located on the beam combiner 14, that is, the input port of the optical signal and the output port of the modulated optical signal are located on two sides of the modulation arm. Therefore, compared with the conventional optical modulator 10, the optical modulator 20 can reduce a trace loss and reduce optical port coupling difficulty and a quantity of fiber arrays (fiber array, FA) by disposing the optical ports on a same side.

The following separately describes components included in the optical modulator 20.

### (1) Beam combiner/splitter 21

For example, the beam combiner/splitter 21 may be a multi-mode interferometer (multi-mode interferometer, MMI). For example, the beam combiner/splitter 21 is a 2*2 MMI. One side of the 2*2 MMI has two ports: a port 1 and a port 2, and correspondingly, and the other side of the 2*2 MMI also has two ports: a port 3 and a port 4. The port 1 is configured to input an optical signal, the port 2 is configured to output a modulated optical signal, the port 3 is configured to output the first optical signal, and the port 4 is configured to output the second optical signal.

For example, in specific implementation, a direct-current phase difference between the second modulated optical signal and the fourth modulated optical signal may be controlled by adjusting a working point of the optical modulator 20 and/or a difference between the lengths of the phase modulation area of the first electro-optic phase shifter 22 and the phase modulation area of the second electro-optic phase shifter 23, so that the modulated optical signal obtained through combination of the second modulated optical signal and the fourth modulated optical signal may be output from another port of the 2*2 MMI, and no backflow is formed on an input port.

It may be understood that, in another possible embodiment, the beam combiner/splitter 21 may alternatively be another possible interferometer, for example, a Mach-Zehnder interferometer (Mach-Zehnder interferometer, MZI). This is not specifically limited.

The beam combiner/splitter 21 splits the input optical signal into the first optical signal and the second optical signal based on a splitting ratio of 1:m, where m>0 and m≠1. In other words, the beam combiner/splitter 21 may split the input optical signal in an unequal ratio. In this way, after phase modulation is performed on the first optical signal and the second optical signal separately subsequently, because the first optical signal and the second optical signal are obtained through splitting of the unequal ratio, after the first optical signal and the second optical signal are combined, a phase deviation of the first optical signal and a phase deviation of the second optical signal are not completely offset. Therefore, compared with the input optical signal, an optical signal that is finally output is superimposed with additional phase modulation, so that pre-compensation can be implemented.

It may be understood that pre-compensation described in embodiments of this application may occur before a fiber link, that is, the optical signal is modulated before dispersion occurs. For example, the optical modulator 20 is disposed on a transmitting apparatus side, that is, phase modulation is performed on the optical signal on the transmitting apparatus side. Therefore, after the optical signal output by the optical modulator 20 enters the fiber link, even if dispersion occurs in the optical signal in the fiber link, because pre-compensation is performed for the optical signal before the optical signal enters the fiber link, a problem caused by dispersion can be effectively reduced.

The following describes in detail, through mathematical derivation, dispersion compensation performed by the optical modulator 20 on the optical signal in this application.

In the optical modulator 20 in this application, an electric field of the first optical signal is: ${E}_{1} = {Ae}^{ix \left(t\right)}$ (1)

An electric field of the second optical signal is: ${E}_{2} = {Be}^{- ix \left(t\right)}$ (2)

x(t) represents a composite signal. In the optical modulator 20 in this application, x(t) represents a composite signal obtained through joint acting of a real signal *s(t)* and a direct current bias b (different direct current biases correspond to different working points), that is: $x \left(t\right) = s \left(t\right) + b$ (3)

In the foregoing formulas (1) and (2), A is a component corresponding to the first optical signal output by the beam combiner/splitter 21, and B is a component corresponding to the second optical signal output by the beam combiner/splitter 21. A, B, and m satisfy the following formula: A: B=1: m. When m=1, A=B. In addition, A and B further satisfy the following formula: ${A}^{2} + {B}^{2} = 1$ (4)

According to the foregoing formulas (1), (2), (3), and (4), an electric field obtained through combination of the first optical signal and the second optical signal is: $E = {E}_{1} + {E}_{2} = \left(A+B\right) cosx \left(t\right) + i \left(A-B\right) sinx \left(t\right)$ (5)

Because the working point is in a linear area (in the linear area, because a mapping function relationship between an electrical signal and an optical signal is a simple linear relationship, after information carried in the electrical signal is modulated into the optical signal, the information does not change or be distorted, and because a relationship between a direct current bias voltage and output optical power of the optical modulator is similar to a sin curve, if the working point is at a middle position of the sin curve (for example, positions of sin0 and sinπ), it is considered that the optical modulator works in the linear area), the formula (5) may be approximately as follows: $E = \left(A+B\right) x \left(t\right) + i \left(A-B\right) x \left(t\right)$ (6)

When the optical modulator 20 is used in a communication system, an example in which the optical signal is transmitted in a 10-km fiber link is used. It is assumed that a transfer function generated by dispersion effect is h. An electric field of an optical signal received by a receiving apparatus is: $E \left(t\right) = E ⊗ h = \left(A+B\right) \left[s\left(t\right)⊗h\right] + \left(A+B\right) b + i \left(B-A\right) \left[s\left(t\right)⊗h\right] - i \left(B-A\right) b$ (7)

According to the foregoing formula (7), strength of the optical signal received by the receiving apparatus is: $\begin{matrix}I \left(t\right) = \left|E\left(t\right)\right| \\ = {\left[\left(A+B\right)Re\left[s\left(t\right)⊗h\right]+\left(A+B\right)b+\left(A-B\right)Im\left[s\left(t\right)⊗h\right]\right]}^{2} + \\ {\left[\left(A+B\right)Im\left[s\left(t\right)⊗h\right]+\left(B-A\right)Re\left[s\left(t\right)⊗h\right]+\left(A-B\right)b\right]}^{2}\end{matrix}$ (8)

If the constant terms in the foregoing formula (8) are ignored, the following formula may be obtained: $\begin{matrix}I \left(t\right) = 2 \left(Re{\left[s\left(t\right)⊗h\right]}^{2}+Im{\left[s\left(t\right)⊗h\right]}^{2}\right) + 8 ABb ∗ Re \left[s\left(t\right)⊗h\right] + \\ 4 \left({A}^{2}-{B}^{2}\right) b ∗ Im \left[s\left(t\right)⊗h\right]\end{matrix}$ (9)

In the foregoing formula (9), because a high-order term is an error generated by approximation of a former term, the high-order term may be ignored. Therefore, a fast Fourier transform (fast fourier transform, FFT) is performed on *I*(*t*), and a result obtained through fast Fourier transform is substituted into the following formula: $H \left(ω\right) = cos \left({ω}^{2} βL/2\right) + isin \left({ω}^{2} βL/2\right)$ (10)

The following formula may be obtained: $I \left(ω\right) = 8 ABb ∗ S \left(ω\right) ∗ cos \left({ω}^{2}βL/2\right) + 4 \left({A}^{2}-{B}^{2}\right) b ∗ S \left(ω\right) ∗ sin \left({ω}^{2}βL/2\right)$ (11)

When the splitting ratio of the beam combiner/splitter 21 is 1, if m=1 and A=B, *I*(*ω*) *=* 8*ABb* * *S*(*ω*) * *cos* (*ω*²*βL*/2)*.* The optical signal undergoes cos filtering effect caused by dispersion.

When the splitting ratio of the beam combiner/splitter 21 is not equal to 1, m≠1, that is, A≠B. In this case, the part 4(*A*² *- B*²)*b* * *S*(*ω*) * *sin*(*ω*²*βL*/2) in *I*(*ω*) is not zero, and dispersion compensation can be implemented. In addition, a positive compensation direction or a negative compensation direction of the optical signal may be controlled based on a relative value of A and B.

### (2) First electro-optic phase shifter 22 and second electro-optic phase shifter 23

For example, the first electro-optic phase shifter 22 may include a first traveling wave electrode. The first electro-optic phase shifter 22 may load a high-speed electrical signal to the phase modulation area (referred to as a first phase modulation area) of the first electro-optic phase shifter 22 through the first traveling wave electrode, and change a refractive index in the first phase modulation area by changing a carrier concentration in a waveguide of the first phase modulation area, to perform first phase modulation on an optical signal that passes through the first phase modulation area.

The second electro-optic phase shifter 23 may include a second traveling wave electrode. The second electro-optic phase shifter 23 may load a high-speed electrical signal to the phase modulation area (referred to as a second phase modulation area) of the second electro-optic phase shifter 23 through the second traveling wave electrode, and change a refractive index in the second phase modulation area by changing a carrier concentration in a waveguide of the second phase modulation area, to perform second phase modulation on an optical signal that passes through the second phase modulation area.

It may be understood that the first phase modulation and the second phase modulation may be the same, or may be different. In actual application, the first phase modulation and the second phase modulation may be set based on factors such as a fiber link and a transmission distance, so that quality of the optical signal received by the receiving apparatus is better.

### (3) First reverser 24 and second reverser 25

The first reverser 24 and the second reverser 25 may be of structures that enable optical signals to be reversely transmitted. For example, the first reverser 24 may be a first reflector, a first waveguide loopback device, or a first grating structure, and the second reverser 25 may be a second reflector, a second waveguide loopback device, or a second grating structure.

It may be understood that the first reverser 24 and the second reverser 25 may be of independent structures, for example, the first reverser 24 and the second reverser 25 are two independent reflectors respectively; or the first reverser 24 and the second reverser 25 may be of an integrated structure, for example, the first reverser 24 and the second reverser 25 are a same reflector.

### Embodiment 2

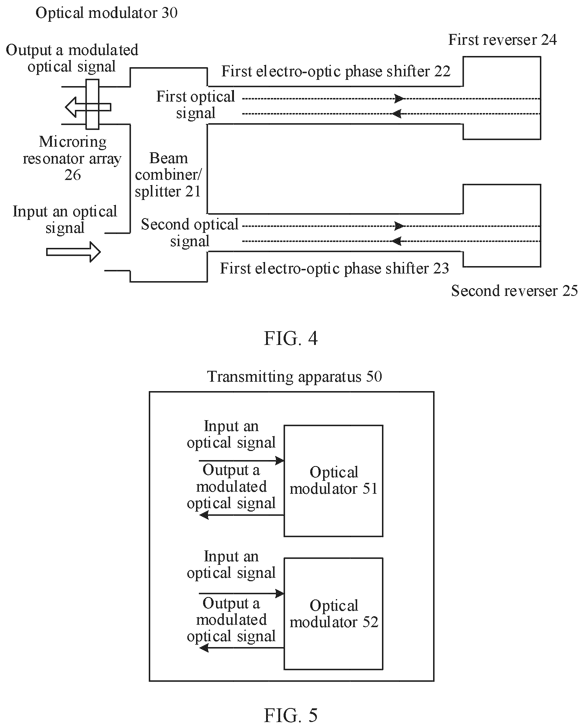

FIG. 4 is a diagram of a structure of an optical modulator according to Embodiment 2 of this application, As shown in FIG. 4, an optical modulator 30 may include a beam combiner/splitter 21, a first electro-optic phase shifter 22 and a second electro-optic phase shifter 23 that are connected to the beam combiner/splitter 21, a first reverser 24 connected to the first electro-optic phase shifter 22, a second reverser 25 connected to the second electro-optic phase shifter 23, and a microring resonator array 26 connected to the beam combiner/splitter 21. Compared with the optical modulator 20 shown in FIG. 2, the optical modulator 30 shown in FIG. 4 further includes the microring resonator array 26. For content other than this difference, refer to the descriptions in Embodiment 1.

In the optical modulator 30, the microring resonator array 26 is configured to perform delay compensation on a modulated optical signal output by the beam combiner/splitter 21. Different degrees of delay compensation may be applied to optical signals with different wavelengths, so that dispersion compensation effect can be further enhanced (that is, dispersion may be compensated for by setting an unequal splitting ratio and the microring resonator array), to balance dispersion caused by a transmission link.

For example, the microring resonator array 26 may include one microring resonator (which may also be referred to as a microring for short), or may include a plurality of microring resonators. When the microring resonator array 26 includes a plurality of microring resonators, the plurality of microring resonators may be connected in series or in parallel. This is not specifically limited. For example, the microring resonator array 26 includes one microring. The microring may be a thermally adjusted microring. In other words, a delay imposed by the microring on an optical signal may be adjusted by controlling a temperature.

### Embodiment 3

FIG. 5 is a diagram of a structure of a transmitting apparatus according to Embodiment 3 of this application. As shown in FIG. 5, a transmitting apparatus 50 includes one or more optical modulators. FIG. 5 shows two optical modulators (namely, an optical modulator 51 and an optical modulator 52) included in the transmitting apparatus 50. The optical modulator 51 or the optical modulator 52 may be the optical modulator 20 in Embodiment 1, or may be the optical modulator 30 Embodiment 2.

The optical modulator 51 and the optical modulator 52 may work independently. For example, the optical modulator 51 may modulate an optical signal with a first wavelength (for example, 1331 nm), and output a modulated optical signal. The optical modulator 52 may modulate an optical signal with a second wavelength (for example, 1351 nm), and output a modulated optical signal.

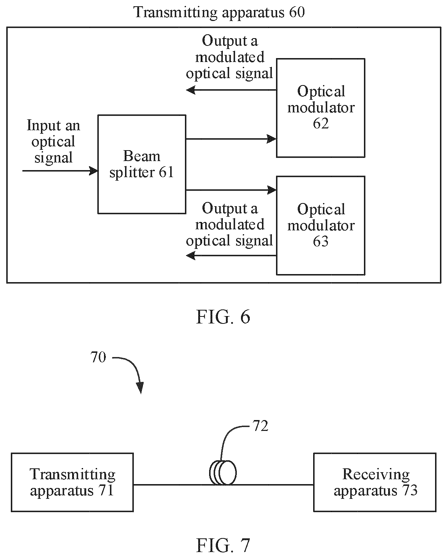

FIG. 6 is a diagram of another structure of a transmitting apparatus according to Embodiment 3 of this application. As shown in FIG. 6, a transmitting apparatus 60 includes a beam splitter 61 and N optical modulators connected to the beam splitter 61. In FIG. 6, N=2 is used as an example for illustration. The N optical modulators are respectively an optical modulator 62 and an optical modulator 63. The optical modulator 62 or the optical modulator 63 may be the optical modulator 20 in Embodiment 1, or may be the optical modulator 30 in Embodiment 2.

The beam splitter 61 is configured to: split an input optical signal into N optical signals, and respectively input the N optical signals into the N optical modulators. An i^{th} optical modulator in the N optical modulators is configured to: perform phase modulation on an i^{th} optical signal in the N optical signals, and output an i^{th} modulated optical signal, where i=1, 2, ..., N, and N is an integer greater than 1. For example, the N optical signals have a same splitting ratio, that is, a splitting ratio of the N optical signals is 1:1.

In other words, the beam splitter 61 splits the input optical signal into the N optical signals, and the N optical signals respectively enter the N optical modulators for phase modulation, so that the N optical modulators may respectively output modulated optical signals. Splitting ratios corresponding to the N optical modulators may be the same or may be different. When the splitting ratios corresponding to the N optical modulators are different, different transmission distances may be adapted, so that signal transmission is more flexible.

Through use of the structure shown in FIG. 6, the N optical modulators in the transmitting apparatus may multiplex a same input end through the beam splitter, that is, the N optical modulators may modulate optical signals with a same wavelength, and respectively output modulated optical signals, to improve integration.

Based on the transmitting apparatus shown in FIG. 5 or FIG. 6, an embodiment of this application further provides a communication system. FIG. 7 is a diagram of a communication system according to an embodiment of this application. As shown in FIG. 7, a communication system 70 includes a transmitting apparatus 71 (the transmitting apparatus 71 may be the transmitting apparatus 50 shown in FIG. 5 or the transmitting apparatus 60 shown in FIG. 6), a fiber link 72, and a receiving apparatus 73. The fiber link 72 is configured to connect the transmitting apparatus 71 and the receiving apparatus 73. In the communication system 70, dispersion occurs after a modulated optical signal transmitted by the transmitting apparatus 71 is transmitted over a long distance in the fiber link 72, and an optical modulator in the transmitting apparatus may perform pre-compensation on an optical signal to compensate for dispersion, so that quality of the optical signal received by the receiving apparatus 73 is better, to implement high-speed, large-capacity, and long-range communication.

### Embodiment 4

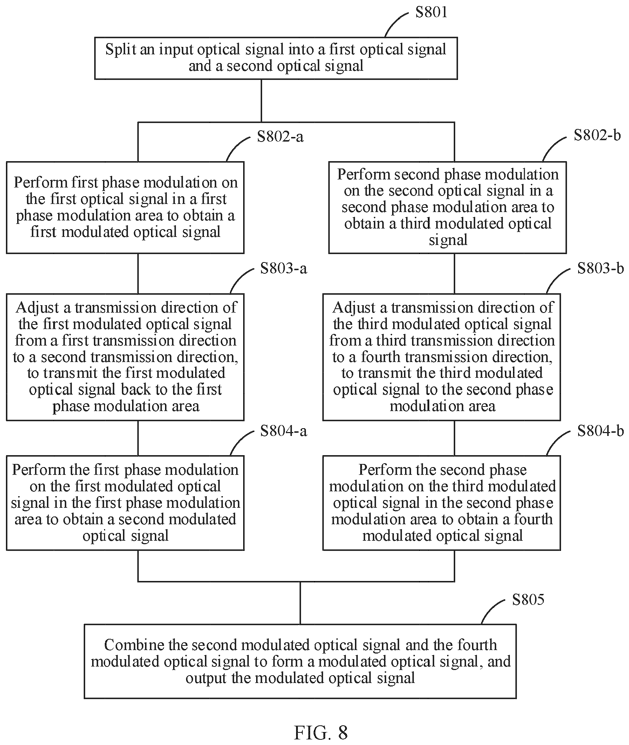

FIG. 8 is a schematic flowchart corresponding to a modulation method according to an embodiment of this application. In this embodiment of this application, the optical modulator in Embodiment 1 or Embodiment 2 may be used to perform the modulation method on an optical signal. As shown in FIG. 8, the modulation method may include the following steps.

S801: Split an input optical signal into a first optical signal and a second optical signal.

S802-a: Perform first phase modulation on the first optical signal in a first phase modulation area to obtain a first modulated optical signal.

S803-a. Adjust a transmission direction of the first modulated optical signal from a first transmission direction to a second transmission direction, to transmit the first modulated optical signal to the first phase modulation area, where the second transmission direction is opposite to the first transmission direction.

S804-a. Perform the first phase modulation on the first modulated optical signal in the first phase modulation area to obtain a second modulated optical signal.

S802-b: Perform second phase modulation on the second optical signal in a second phase modulation area to obtain a third modulated optical signal.

S803-b: Adjust a transmission direction of the third modulated optical signal from a third transmission direction to a fourth transmission direction, to transmit the third modulated optical signal to the second phase modulation area, where the fourth transmission direction is opposite to the third transmission direction.

S804-b: Perform the second phase modulation on the third modulated optical signal in the second phase modulation area to obtain a fourth modulated optical signal.

S805: Combine the second modulated optical signal and the fourth modulated optical signal to form a modulated optical signal, and output the modulated optical signal.

According to the foregoing method, the first optical signal may be reversely transmitted after undergoing phase modulation once, so that the first optical signal undergoes phase modulation twice back and forth in the first phase modulation area (that is, a phase shift amount of the first optical signal is doubled). Similarly, the second optical signal may be reversely transmitted after undergoing phase modulation once, so that the second optical signal undergoes phase modulation twice back and forth in the second phase modulation area (that is, a phase shift amount of the second optical signal is doubled). Therefore, lengths of the phase modulation areas may be halved, to effectively reduce a size of the optical modulator and improve integration.

The term "and/or" in embodiments of this application describes an association relationship between associated objects and may indicate three relationships. For example, A and/or B may indicate the following cases: Only A exists, both A and B exist, and only B exists, where A and B may be singular or plural. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

Reference to "an embodiment", "some embodiments", or the like described in this specification indicates that one or more embodiments of this application include a specific feature, structure, or characteristic described with reference to this embodiment. Therefore, statements such as "in an embodiment", "in another embodiment", "in some embodiments", "in some other embodiments", or "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It is clearly that a person skilled in the art can make various modifications and variations to this application without departing from the scope of this application. This application is intended to cover these modifications and variations of this application provided that they fall within the scope of protection defined by the following claims and their technologies.

## Claims

1. An optical modulator (20, 30), wherein the optical modulator (20, 30) comprises: a beam combiner/splitter (21), a first electro-optic phase shifter (22) and a second electro-optic phase shifter (23) that are connected to the beam combiner/splitter (21), a first reverser (24) connected to the first electro-optic phase shifter (22), and a second reverser (25) connected to the second electro-optic phase shifter (23);
the beam combiner/splitter (21) is configured to: split an input optical signal into a first optical signal and a second optical signal, input the first optical signal into the first electro-optic phase shifter (22), and input the second optical signal into the second electro-optic phase shifter (23), wherein a splitting ratio of the first optical signal to the second optical signal is 1:m, m>0, and m≠1;
the first electro-optic phase shifter (22) is configured to: perform first phase modulation on the first optical signal to obtain a first modulated optical signal, and input the first modulated optical signal into the first reverser (24);
the first reverser (24) is configured to adjust a transmission direction of the first modulated optical signal from a first transmission direction to a second transmission direction, to input the first modulated optical signal into the first electro-optic phase shifter (22), wherein the second transmission direction is opposite to the first transmission direction;
the first electro-optic phase shifter (22) is further configured to: perform the first phase modulation on the first modulated optical signal to obtain a second modulated optical signal, and input the second modulated optical signal into the beam combiner/splitter (21);
the second electro-optic phase shifter (23) is configured to: perform second phase modulation on the second optical signal to obtain a third modulated optical signal, and input the third modulated optical signal into the second reverser;
the second reverser (25) is configured to adjust a transmission direction of the third modulated optical signal from a third transmission direction to a fourth transmission direction, to input the third modulated optical signal into the second electro-optic phase shifter (23), wherein the fourth transmission direction is opposite to the third transmission direction;
the second electro-optic phase shifter (23) is further configured to: perform the second phase modulation on the third modulated optical signal to obtain a fourth modulated optical signal, and input the fourth modulated optical signal into the beam combiner/splitter (21); and
the beam combiner/splitter (21) is further configured to: combine the second modulated optical signal and the fourth modulated optical signal to form a modulated optical signal, and output the modulated optical signal.

2. The optical modulator (20, 30) according to claim 1, wherein the first reverser (24) is a first reflector, a first waveguide loopback device, or a first grating structure; and
the second reverser (25) is a second reflector, a second waveguide loopback device, or a second grating structure.

3. The optical modulator (20, 30) according to any one of claims 1 to 2, wherein the beam combiner/splitter (21) is a multimode interferometer.

4. The optical modulator (20, 30) according to any one of claims 1 to 3, wherein the optical modulator (20, 30) further comprises a microring resonator array (26) connected to the beam combiner/splitter (21); and
the microring resonator array (26) is configured to perform delay compensation on the modulated optical signal output by the beam combiner/splitter (21).

5. A transmitting apparatus (50, 60), wherein the transmitting apparatus (50, 60) comprises the optical modulator (20, 30, 62, 63) according to any one of claims 1 to 4.

6. The transmitting apparatus (60) according to claim 5, further comprising a beam splitter (61) and N optical modulators (62, 63) connected to the beam splitter (61), the N optical modulators (62, 63) comprising the optical modulator (62, 63);
the beam splitter (61) is configured to: split an input optical signal into N optical signals, and respectively input the N optical signals into the N optical modulators (62, 63); and
an i^{th} optical modulator in the N optical modulators (62, 63) is configured to: perform phase modulation on an i^{th} optical signal in the N optical signals, and output an i^{th} modulated optical signal, wherein i=1, 2, ..., N, and N is an integer greater than 1.

7. The transmitting apparatus (60) according to claim 6, wherein the N optical signals have a same splitting ratio.

8. A communication system (70), comprising a receiving apparatus (73), a fiber link (72), and the transmitting apparatus (71) according to any one of claims 5 to 7, wherein the fiber link (72) connects the transmitting apparatus (71) and the receiving apparatus (73).

9. A modulation method, wherein the method comprises:
splitting (S801) an input optical signal into a first optical signal and a second optical signal, wherein a splitting ratio of the first optical signal to the second optical signal is 1:m, m>0, and m≠1;
performing (S802-a), in a first phase modulation area, first phase modulation on the first optical signal to obtain a first modulated optical signal; adjusting (S803-a) a transmission direction of the first modulated optical signal from a first transmission direction to a second transmission direction, to transmit the first modulated optical signal to the first phase modulation area, wherein the second transmission direction is opposite to the first transmission direction; and performing (S804-a), in the first phase modulation area, the first phase modulation on the first modulated optical signal to obtain a second modulated optical signal;
performing (S802-b), in a second phase modulation area, second phase modulation on the second optical signal to obtain a third modulated optical signal; adjusting (S803-b) a transmission direction of the third modulated optical signal from a third transmission direction to a fourth transmission direction, to transmit the third modulated optical signal to the second phase modulation area, wherein the fourth transmission direction is opposite to the third transmission direction; and performing (S804-b), in the second phase modulation area, the second phase modulation on the third modulated optical signal to obtain a fourth modulated optical signal; and
combining (S805) the second modulated optical signal and the fourth modulated optical signal to form a modulated optical signal, and outputting the modulated optical signal.

## Patentansprüche

1. Optischer Modulator (20, 30), wobei der optische Modulator (20, 30) Folgendes umfasst: einen Strahlkombinierer/-teiler (21), einen ersten elektrooptischen Phasenschieber (22) und einen zweiten elektrooptischen Phasenschieber (23), die mit dem Strahlkombinierer/-teiler (21) verbunden sind, einen ersten Umkehrer (24), der mit dem ersten elektrooptischen Phasenschieber (22) verbunden ist, und einen zweiten Umkehrer (25), der mit dem zweiten elektrooptischen Phasenschieber (23) verbunden ist;
der Strahlkombinierer/-teiler (21) zu Folgendem konfiguriert ist: Teilen eines eingegebenen optischen Signals in ein erstes optisches Signal und ein zweites optisches Signal, Eingeben des ersten optischen Signals in den ersten elektrooptischen Phasenschieber (22) und Eingeben des zweiten optischen Signals in den zweiten elektrooptischen Phasenschieber (23), wobei ein Teilungsverhältnis des ersten optischen Signals zu dem zweiten optischen Signal 1:m ist, m>0 ist und m≠1 ist;
der erste elektrooptische Phasenschieber (22) zu Folgendem konfiguriert ist: Durchführen einer ersten Phasenmodulation an dem ersten optischen Signal, um ein erstes moduliertes optisches Signal zu erlangen, und Eingeben des ersten modulierten optischen Signals in den ersten Umkehrer (24);
der erste Umkehrer (24) dazu konfiguriert ist, eine Übertragungsrichtung des ersten modulierten optischen Signals von einer ersten Übertragungsrichtung auf eine zweite Übertragungsrichtung einzustellen, um das erste modulierte optische Signal in den ersten elektrooptischen Phasenschieber (22) einzugeben, wobei die zweite Übertragungsrichtung der ersten Übertragungsrichtung entgegengesetzt ist;
der erste elektrooptische Phasenschieber (22) ferner zu Folgendem konfiguriert ist: Durchführen der ersten Phasenmodulation an dem ersten modulierten optischen Signal, um ein zweites moduliertes optisches Signal zu erlangen, und Eingeben des zweiten modulierten optischen Signals in den Strahlkombinierer/-teiler (21);
der zweite elektrooptische Phasenschieber (23) zu Folgendem konfiguriert ist: Durchführen einer zweiten Phasenmodulation an dem zweiten optischen Signal, um ein drittes moduliertes optisches Signal zu erlangen, und Eingeben des dritten modulierten optischen Signals in den zweiten Umkehrer;
der zweite Umkehrer (25) dazu konfiguriert ist, eine Übertragungsrichtung des dritten modulierten optischen Signals von einer dritten Übertragungsrichtung auf eine vierte Übertragungsrichtung einzustellen, um das dritte modulierte optische Signal in den zweiten elektrooptischen Phasenschieber (23) einzugeben, wobei die vierte Übertragungsrichtung der dritten Übertragungsrichtung entgegengesetzt ist;
der zweite elektrooptische Phasenschieber (23) ferner zu Folgendem konfiguriert ist: Durchführen der zweiten Phasenmodulation an dem dritten modulierten optischen Signal, um ein viertes moduliertes optisches Signal zu erlangen, und Eingeben des vierten modulierten optischen Signals in den Strahlkombinierer/-teiler (21); und
der Strahlkombinierer/-teiler (21) ferner zu Folgendem konfiguriert ist: Kombinieren des zweiten modulierten optischen Signals und des vierten modulierten optischen Signals, um ein moduliertes optisches Signal zu bilden, und Ausgeben des modulierten optischen Signals.

2. Optischer Modulator (20, 30) nach Anspruch 1, wobei der erste Umkehrer (24) ein erster Reflektor, eine erste Wellenleiter-Loopback-Einrichtung oder eine erste Gitterstruktur ist; und der zweite Umkehrer (25) ein zweiter Reflektor, eine zweite Wellenleiter-Loopback-Einrichtung oder eine zweite Gitterstruktur ist.

3. Optischer Modulator (20, 30) nach einem der Ansprüche 1 bis 2, wobei der Strahlkombinierer/-teiler (21) ein Multimode-Interferometer ist.

4. Optischer Modulator (20, 30) nach einem der Ansprüche 1 bis 3, wobei der optische Modulator (20, 30) ferner ein Mikroringresonatorarray (26) umfasst, das mit dem Strahlkombinierer/-teiler (21) verbunden ist; und
das Mikroringresonatorarray (26) dazu konfiguriert ist, einen Verzögerungsausgleich an dem modulierten optischen Signal durchzuführen, das durch den Strahlkombinierer/-teiler (21) ausgegeben wird.

5. Übertragungsvorrichtung (50, 60), wobei die Übertragungsvorrichtung (50, 60) den optischen Modulator (20, 30, 62, 63) nach einem der Ansprüche 1 bis 4 umfasst.

6. Übertragungsvorrichtung (60) nach Anspruch 5, ferner umfassend einen Strahlteiler (61) und N optische Modulatoren (62, 63), die mit dem Strahlteiler (61) verbunden sind, wobei die N optischen Modulatoren (62, 63) den optischen Modulator (62, 63) umfassen;
der Strahlteiler (61) zu Folgendem konfiguriert ist: Teilen eines eingegebenen optischen Signals in N optische Signale und jeweiligem Eingeben der N optischen Signale in die N optischen Modulatoren (62, 63); und
ein i-ter optischer Modulator in den N optischen Modulatoren (62, 63) zu Folgendem konfiguriert ist: Durchführen einer Phasenmodulation an einem i-ten optischen Signal in den N optischen Signalen und Ausgeben eines i-ten modulierten optischen Signals, wobei i = 1, 2, ..., N ist und N eine ganze Zahl größer als 1 ist.

7. Übertragungsvorrichtung (60) nach Anspruch 6, wobei die N optischen Signale ein gleiches Teilungsverhältnis aufweisen.

8. Kommunikationssystem (70), umfassend eine Empfangsvorrichtung (73), eine Faserverknüpfung (72) und die Übertragungsvorrichtung (71) nach einem der Ansprüche 5 bis 7, wobei die Faserverknüpfung (72) die Übertragungsvorrichtung (71) und die Empfangsvorrichtung (73) verbindet.

9. Modulationsverfahren, wobei das Verfahren Folgendes umfasst:
Teilen (S801) eines eingegebenen optischen Signals in ein erstes optisches Signal und ein zweites optisches Signal, wobei ein Teilungsverhältnis des ersten optischen Signals zu dem zweiten optischen Signal 1:m ist, m>0 ist und m≠1 ist;
Durchführen (S802-a), in einem ersten Phasenmodulationsbereich, einer ersten Phasenmodulation an dem ersten optischen Signal, um ein erstes moduliertes optisches Signal zu erlangen;
Einstellen (S803-a) einer Übertragungsrichtung des ersten modulierten optischen Signals von einer ersten Übertragungsrichtung auf eine zweite Übertragungsrichtung, um das erste modulierte optische Signal an den ersten Phasenmodulationsbereich zu übertragen, wobei die zweite Übertragungsrichtung der ersten Übertragungsrichtung entgegengesetzt ist; und Durchführen (S804-a), in dem ersten Phasenmodulationsbereich, der ersten Phasenmodulation an dem ersten modulierten optischen Signal, um ein zweites moduliertes optisches Signal zu erlangen;
Durchführen (S802-b), in einem zweiten Phasenmodulationsbereich, einer zweiten Phasenmodulation an dem zweiten optischen Signal, um ein drittes moduliertes optisches Signal zu erlangen; Einstellen (S803-b) einer Übertragungsrichtung des dritten modulierten optischen Signals von einer dritten Übertragungsrichtung auf eine vierte Übertragungsrichtung, um das dritte modulierte optische Signal an den zweiten Phasenmodulationsbereich zu übertragen, wobei die vierte Übertragungsrichtung der dritten Übertragungsrichtung entgegengesetzt ist; und Durchführen (S804-b), in dem zweiten Phasenmodulationsbereich, der zweiten Phasenmodulation an dem dritten modulierten optischen Signal, um ein viertes moduliertes optisches Signal zu erlangen; und
Kombinieren (S805) des zweiten modulierten optischen Signals und des vierten modulierten optischen Signals, um ein moduliertes optisches Signal zu bilden, und Ausgeben des modulierten optischen Signals.

## Revendications

1. Modulateur optique (20, 30), dans lequel le modulateur optique (20, 30) comprend : un combinateur/séparateur de faisceau (21), un premier déphaseur électro-optique (22) et un second déphaseur électro-optique (23) qui sont connectés au combinateur/séparateur de faisceau (21), un premier inverseur (24) connecté au premier déphaseur électro-optique (22), et un second inverseur (25) connecté au second déphaseur électro-optique (23) ;
le combineur/séparateur de faisceau (21) est configuré pour :
séparer un signal optique d'entrée en un premier signal optique et un second signal optique, entrer le premier signal optique dans le premier déphaseur électro-optique (22) et entrer le second signal optique dans le second déphaseur électro-optique (23), dans lequel un rapport de séparation entre le premier signal optique et le second signal optique est de 1:m, m > 0 et m ≠ 1 ;
le premier déphaseur électro-optique (22) est configuré pour :
réaliser une première modulation de phase sur le premier signal optique pour obtenir un premier signal optique modulé, et entrer le premier signal optique modulé dans le premier inverseur (24) ;
le premier inverseur (24) est configuré pour ajuster une direction de transmission du premier signal optique modulé depuis une première direction de transmission à une deuxième direction de transmission, pour entrer le premier signal optique modulé dans le premier déphaseur électro-optique (22), dans lequel la deuxième direction de transmission est opposée à la première direction de transmission ;
le premier déphaseur électro-optique (22) est en outre configuré pour : réaliser la première modulation de phase sur le premier signal optique modulé pour obtenir un deuxième signal optique modulé, et entrer le deuxième signal optique modulé dans le combineur/séparateur de faisceau (21) ;
le second déphaseur électro-optique (23) est configuré pour :
réaliser une seconde modulation de phase sur le second signal optique pour obtenir un troisième signal optique modulé, et entrer le troisième signal optique modulé dans le second inverseur ;
le second inverseur (25) est configuré pour ajuster une direction de transmission du troisième signal optique modulé depuis une troisième direction de transmission à une quatrième direction de transmission, pour entrer le troisième signal optique modulé dans le second déphaseur électro-optique (23), dans lequel la quatrième direction de transmission est opposée à la troisième direction de transmission ;
le second déphaseur électro-optique (23) est en outre configuré pour : réaliser la seconde modulation de phase sur le troisième signal optique modulé pour obtenir un quatrième signal optique modulé, et entrer le quatrième signal optique modulé dans le combineur/séparateur de faisceau (21) ; et
le combineur/séparateur de faisceau (21) est en outre configuré pour : combiner le deuxième signal optique modulé et le quatrième signal optique modulé pour former un signal optique modulé, et délivrer en sortie le signal optique modulé.

2. Modulateur optique (20, 30) selon la revendication 1, dans lequel le premier inverseur (24) est un premier réflecteur, un premier dispositif de bouclage de guide d'ondes ou une première structure de réseau ; et
le second inverseur (25) est un second réflecteur, un second dispositif de bouclage de guide d'ondes ou une seconde structure de réseau.

3. Modulateur optique (20, 30) selon l'une quelconque des revendications 1 et 2, dans lequel le combinateur/séparateur de faisceau (21) est un interféromètre multimode.

4. Modulateur optique (20, 30) selon l'une quelconque des revendications 1 à 3, dans lequel le modulateur optique (20, 30) comprend en outre une matrice de résonateurs en micro-anneau (26) connectée au combineur/séparateur de faisceau (21) ; et
la matrice de résonateurs en micro-anneau (26) est configurée pour réaliser une compensation de délai sur le signal optique modulé délivré en sortie par le combineur/séparateur de faisceau (21).

5. Appareil de transmission (50, 60), dans lequel l'appareil de transmission (50, 60) comprend le modulateur optique (20, 30, 62, 63) selon l'une quelconque des revendications 1 à 4.

6. Appareil de transmission (60) selon la revendication 5, comprenant en outre un séparateur de faisceau (61) et N modulateurs optiques (62, 63) connectés au séparateur de faisceau (61), les N modulateurs optiques (62, 63) comprenant le modulateur optique (62, 63) ;
le séparateur de faisceau (61) est configuré pour : séparer un signal optique d'entrée en N signaux optiques, et entrer respectivement les N signaux optiques dans les N modulateurs optiques (62, 63) ; et
un i^{-ème} modulateur optique parmi les N modulateurs optiques (62, 63) est configuré pour : réaliser une modulation de phase sur un i^{-ème} signal optique parmi les N signaux optiques, et délivrer en sortie un i^{-ème} signal optique modulé, dans lequel i = 1, 2, ..., N, et N est un entier supérieur à 1.

7. Appareil de transmission (60) selon la revendication 6, dans lequel les N signaux optiques ont un même rapport de séparation.

8. Système de communication (70), comprenant un appareil de réception (73), une liaison à fibre (72) et l'appareil de transmission (71) selon l'une quelconque des revendications 5 à 7, dans lequel la liaison à fibre (72) connecte l'appareil de transmission (71) et l'appareil de réception (73).

9. Procédé de modulation, dans lequel le procédé comprend :
la séparation (S801) d'un signal optique d'entrée en un premier signal optique et un second signal optique, dans lequel un rapport de séparation entre le premier signal optique et le second signal optique est de 1:m, m > 0 et m ≠ 1 ;
la réalisation (S802-a), dans une première zone de modulation de phase, d'une première modulation de phase sur le premier signal optique pour obtenir un premier signal optique modulé ;
l'ajustement (S803-a) d'une direction de transmission du premier signal optique modulé depuis une première direction de transmission à une deuxième direction de transmission, pour transmettre le premier signal optique modulé à la première zone de modulation de phase, dans lequel la deuxième direction de transmission est opposée à la première direction de transmission ; et la réalisation (S804-a), dans la première zone de modulation de phase, de la première modulation de phase sur le premier signal optique modulé pour obtenir un deuxième signal optique modulé ;
la réalisation (S802-b), dans une seconde zone de modulation de phase, d'une seconde modulation de phase sur le second signal optique pour obtenir un troisième signal optique modulé ;
l'ajustement (S803-b) d'une direction de transmission du troisième signal optique modulé depuis une troisième direction de transmission à une quatrième direction de transmission, pour transmettre le troisième signal optique modulé à la seconde zone de modulation de phase, dans lequel la quatrième direction de transmission est opposée à la troisième direction de transmission ; et la réalisation (S804-a), dans la seconde zone de modulation de phase, de la seconde modulation de phase sur le troisième signal optique modulé pour obtenir un quatrième signal optique modulé ; et
la combinaison (S805) du deuxième signal optique modulé et du quatrième signal optique modulé pour former un signal optique modulé, et la délivrance en sortie du signal optique modulé.
